**Europäisches Patentamt**

**European Patent Office**

**Office européen des brevets**

(19)

(11) Veröffentlichungsnummer : **0 410 044 B1**

(12)
# EUROPÄISCHE PATENTSCHRIFT

(45) Veröffentlichungstag der Patentschrift :
25.03.92 Patentblatt 92/13

(21) Anmeldenummer : 89121873.7

(22) Anmeldetag : 27.11.89

(51) Int. Cl.⁵ : **B23Q 39/04,** B23B 3/30

(54) Drehmaschine mit drei Werkstückspindeln.

(30) Priorität : 26.07.89 IT 2132689

(43) Veröffentlichungstag der Anmeldung :
30.01.91 Patentblatt 91/05

(45) Bekanntmachung des Hinweises auf die
Patenterteilung :
25.03.92 Patentblatt 92/13

(84) Benannte Vertragsstaaten :
AT CH DE ES FR GB IT LI SE

(56) Entgegenhaltungen :
EP-A- 0 298 672
DE-A- 3 420 719
DE-A- 3 626 324

(73) Patentinhaber : **GILDEMEISTER ITALIANA S.p.A.**
**Via Donizetti 138**
**I-24030 Brembate di Sopra (IT)**

(72) Erfinder : **Mascheroni, Alberto**
**Via Donizetti, 138**
**I-24030 Brembate Sopra (IT)**

(74) Vertreter : **Mayer, Hans Benno, Dipl.-Ing.**
**de Dominicis & Mayer Piazzale Marengo 6**
**I-20121 Milano (IT)**

EP 0 410 044 B1

## Beschreibung

Die Erfindung betrifft eine Drehmaschine gemäß dem Oberbegriff des 1. Anspruchs.

Eine derartige Maschine zur Vorder- und Rückseitenbearbeitung eines Werkstückes ist aus DE-OS 34 20 719 bekannt. Eine nur beschriebene Ausführungsform der bekannten Drehmaschine mit drei Werkstückspindeln sieht einen verschiebbaren Spindelkasten für die Hauptspindel und eine stationäre Schwenkspindel vor. Die Schwenkspindel ist in einem schaltbaren Spindelgehäuse gelagert, das eine zweite Werkstückspindel in koaxialer Anordnung enthalten kann. Das Spindelgehäuse ist um eine zur Spindelachse senkrechte Achse schaltbar. Bei derartigen Maschinen ist der Abstand der einander zugewandten Werkstückspannmittel von der maximal möglichen Länge der bearbeitbaren Werkstücke plus der Länge der eingesetzten Innenbearbeitungswerkzeuge abhängig. Bei kurzen Werkstücken ergeben sich bei der Übergabe der in der ersten Spindel vorbearbeiteten Werkstücke an die zweite Spindel deshalb erhebliche Verfahrwege, deren Überwindung Zeit beansprucht, während der nicht zerspant werden kann. Diese Nebenzeit verlängert die Bearbeitungszeit eines Werkstücks erheblich.

Es ist außerdem ein Mehrspindel-Drehautomat aus EP-A 298 672 bekannt, der eine Spindeltrommel mit sechs Werkstückspindeln aufweist. In einer Spindellage ist der dort jeweils befindlichen Werkstückspindel eine Gegenspindel zugeordnet, die das Werkstück in dieser Spindellage abgreift und zur Rückseitenbearbeitung mit Hilfe eines Kreuzschlittens aus dem Arbeitsbereich der Hauptspindeln herausfährt. Der Gegenspindel sind stationäre Werkzeuge zur Bearbeitung der Werkstückrückseite zugeordnet, denen das Werkstück durch zweiachsige Verschiebung der Gegenspindel gegenübergestellt wird. Die Transportzeit des Werkstücks in der Gegenspindel und seine Bearbeitung an der Rückseite sind durch die Aufteilung der Bearbeitung der Vorderseite auf sechs Spindeln zeitbestimmend, so daß auch hier die Nebenzeiten für die Bearbeitungszeit eines Werkstücks ausschlaggebend wird. Der Erfindung liegt die Aufgabe zugrunde, auch bei komplexen Bearbeitungsvorgängen, die Zeiten der Maschine, in denen an keinem Werkstück Zerspanungsarbeit geleistet wird, auf ein Minimum zu reduzieren.

Die Aufgabe wird durch die Merkmale des Hauptanspruchs gelöst.

Bei der vorgeschlagenen Drehmaschine verringert sich die ungenutzte Zeit auf die Schaltzeit der Spindeltrommel. Während der Werkstückübergabe von der ersten Spindel auf die gegenüberliegende kann an der parallel angeordneten Werkstückspindel zerspant werden.

Die Bearbeitung der ersten Seite eines Werkstücks an einer verschiebbaren Werkstückspindel hat den Vorteil, daß bei Stangenbearbeitung nur ein stationäres Vorschub- oder Führungsrohr verwendet werden muß. Die Werkstückspindeln für die Bearbeitung der Rückseite eines Werkstücks kommt häufig mit geringer Antriebsleistung und mit kleinem Spann- und Spindellagerdurchmesser aus. Daher kann die Spindeltrommel leicht und klein gehalten werden.

Die parallel zur Werkstückspindelachse gerichteten Schaltachsen der Werkzeugrevolver und die einander zugewandte Anordnung der Werkzeugscheiben ermöglicht die vollkommen identische Ausführung beider Werkzeugträger und beider Kreuzschlitten. Die Werkzeugscheiben können dabei freizügig Außen- und Innenbearbeitungswerkzeuge stationär oder rotieren angetrieben aufnehemen.

In Verbindung mit einer um kleine Winkel schaltbaren Spindeltrommel können an der zweiten und dritten Werkstückspindel mit rotierend angetriebenen Werkzeugen auch außermittig Bearbeitungen ausgeführt werden. Wenn die Drehbewegung der Spindeltrommel numerisch steuerbar ist, kann bei entsprechender Gegendrehbewegung der Werkstückspindeln eine Vorschubbewegung in Y-Richtung erzeugt werden, so daß z. B. eine senkrechte Ausfräsung am Werkstückumfang erzeugt werden kann.

Die Erfindung wird an Hand der Zeichnungen näher erläutert. es zeigen:

Fig. 1 eine Draufsicht auf eine Drehmaschine

Fig. 2 eine Schnitt gemäß Y - Y der Fig. 1

Fig. 3 eine Schnitt gemäß X - X der Fig. 1

Fig. 4 - 8 den Bearbeitungsverlauf

Fig. 9 die außermittige Bearbeitung

Auf einem nicht dargestellten Maschinenbett sind eine obere Längsführungsbahn 1 und eine untere Längsführungsbahn 2 angeordnet. Auf der oberen Längsführungsbahn 1 ist ein Schlitten 3, auf dem ein Spindelkasten 31 mit einer Werkstückspindel 4 befestigt ist, durch einen Vorschubantrieb 5 über eine Gewindespindel 6 in Spindelachsrichtung verschiebbar. Die Werkstückspindel 4 wird von einem Spindelantriebsmotor 7 über einen Riementrieb 8 angetrieben, der sich gemeinsam mit der Werkstückspindel 4 in Spindelachsrichtung bewegt. Mit Hilfe des Spannantriebs 9 können Werkstücke - Stangen-, Futter- oder Wellenteile - in der Werkstückspindel 4 gespannt werden.

Zwischen den Führungen der Führungsbahn 1 ist eine weitere Gewindespindel 10 vorgesehen, die von einem Vorschubmotor 11 gedreht wird, der dem Vorschubmotor 5 für den Spindelkasten 3 gegenüberliegt. Mit Hilfe der Gewindespindel 10 wird ein Längsschlitten 12 auf der Führungsbahn 1 bewegt, der auf seiner Oberseite eine Führungsbahn 13 für einen Planschlitten 14 trägt. Auf dem Planschlitten 14 ist ein Werkzeugrevolver 15 befestigt, an dem eine der Werkstückspindeln 4 zugewandte Werkzeugscheibe 16 befestigt ist. Die Revolverscheibe 16 kann Innen- und Außenbearbeitungswerkzeuge 17,18 aufnehmen. Der auf der unteren Führungsbahn 2 verschiebbar geführte Werkzeugträger 19 entspricht dem oberen Werkzeugträger 20 und ist lediglich gegenüber diesem um 180 Grad gedreht. Die in den Werkzeugscheiben 16,21 der Revolverköpfe 15,22 gehaltenen Werkzeuge 17,18 bzw 23,24 können der Werkstückspindel 4 oder den Gegenspindeln 25, 26 zugewandt sein. Die Gegenspindeln 25, 26 sind drehbar in einer Schalttrommel 33 gelagert und werden durch einen gemeinsamen Spindelantriebsmotor 27 angetrieben. Die Endstellungen 16′, 21′ der jeweiligen Revolverscheiben 16, 21 in Vorschubrichtung sind strichpunktiert angedeutet.

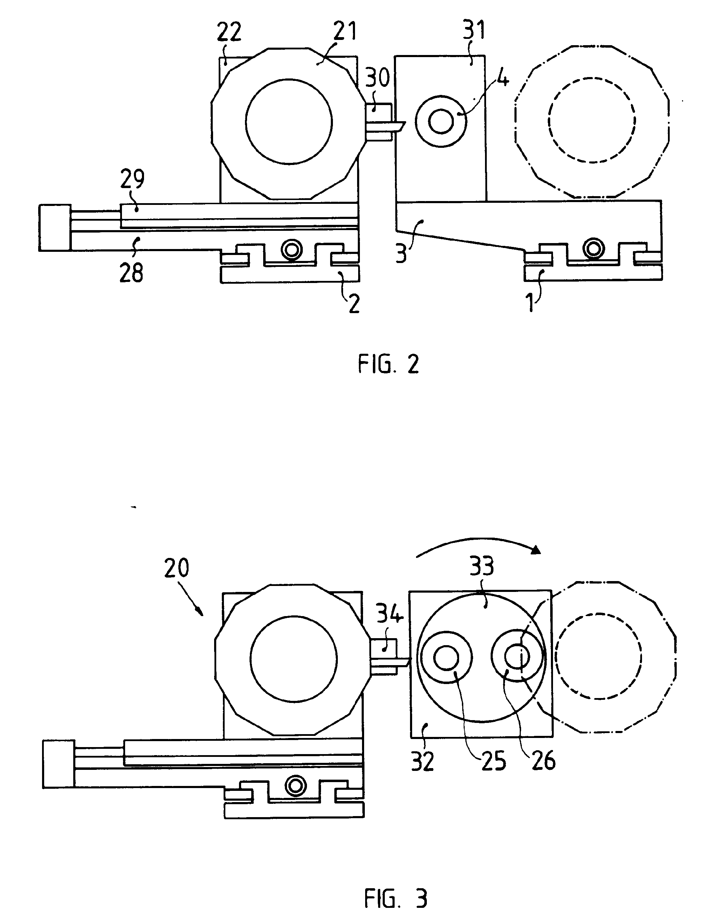

Fig. 2 stellt einen Schnitt durch die Maschine quer zur Spindelachsrichtung mit Blick auf die verschiebliche Werkstückspindel 4 dar. Die Werkstückspindel 4 ist auf einem Schlitten 3 angeordnet, der auf der Führungsbahn 1 verschieblich ist. Auf der Führungsbahn 2 ist der Längsschlitten 28 verschiebbar, der seinerseits den Planschlitten 29 mit dem Werkzeugrevolverkopf 22 trägt. An der Werkzeugscheibe 21 ist lediglich ein Außenbearbeitungswerkzeug 30 angedeutet.

In Fig. 3 ist neben dem Werkzeugträger 20 der stationäre Spindelkasten 32 dargestellt, in dem die Schalttrommel 33 drehbar gelagert ist, die zwei Gegenspindeln 25,26 aufnimmt. Ein von der Gegenspindel 25 gehaltenes Werkstück wird von einem Werkzeug 34 der Werkzeugscheibe 16 bearbeitet, während ein Werkstück der Gegenspindel 26 von Werkzeugen der Werkzeugscheibe 21 bearbeitet werden kann. Die Gegenspindel 26 dient auch als Entladespindel für die beidseitig bearbeiteten Werkstücke.

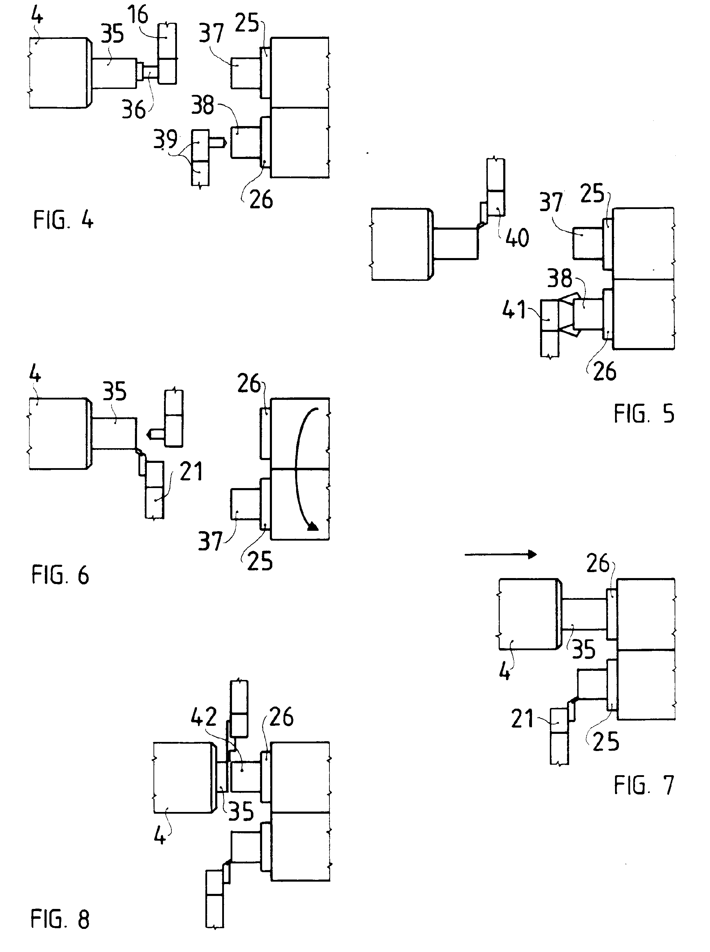

Aus den Fig. 4 bis 8 ist die Bearbeitung sowie der Werkstückfluß durch die Werkzeugmaschine entnehmbar; dargestellt an einem Beispiel für Stangenbearbeitung. Von einem nicht dargestellten Stangenlader wird eine Werkstoffstange 35 durch die Werkstückspindel 4 bis zu einem von der Werkzeugscheibe 16 gehaltenen Anschlag 36 vorgeschoben. Zu Beginn der Bearbeitung eines neuen Werkstückloses wären die Gegenspindeln 25,26 leer; während der fortlaufenden Bearbeitung halten die Gegenspindeln 25,26 einseitig vorbearbeitete Werkstücke 37,38. Das in der Gegenspindel 26 gehaltene Werkstück 38 wird während des Ladevorganges an Werkstückspindel 4 noch von einem Werkzeug 39 der Werkzeugecheibe 21 bearbeitet.

Während in Fig. 5 ein Werkzeug 40 des Werkzeugrevolvers 15 die Bearbeitung der 1. Werkstückseite beginnt, wird aus Gegenspindel 26 ein fertig bearbeitetes Werkstück 38 abgegriffen. Die Entladeeinrichtng kann aus einem am Revolverkopf 22 befestigten Abgreifzange 41 bestehen. Die entladene Gegenspindel 26 wird nun durch die Spindeltrommel in eine koaxiale Lage zur Werkstückspindel 4 geschwenkt. Der Revolverkopf 22 ist zwischenzeitlich zur Werkstückspindel 4 zurückgekehrt (Fig. 6) und unterstützt den Werkzeugrevolver 35 bei der Bearbeitung der 1. Seite des nächsten Werkstücks 35, so daß eine zeitsparende 4-achsige Bearbeitung durchgeführt wird.

Nach Beendigung dieser Bearbeitung wird die Werkzeugscheibe 21 zur Gegenspindel 25 verschoben und bearbeitet das Werkstück 37. Die Werkstückspindel 4 verfährt gemäß Pfeil in Spindelachsrichtung und schiebt die einseitig bearbeitete Werkstückstange 35 in die Spanneinrichtung der Gegenspindel 26 (Fig. 7). Nachdem die Werkstoffstange 35 sowohl von der Werkstückspindel 4 als auch von der Gegenspindel 26 gespannt wurde, kann ein Werkstück 42 abgestochen werden (Fig. 8). Während des Übergabevorgangs und des Abstechens dieses Werkstücks 42 konnte an der Gegenspindel 25 fortwährend gearbeitet werden. Mit der Rückkehr der Werkstückspindel 4 in ihre Ausgangslage beginnt ein neuer Bearbeitungszyklus. Für Futter- und Wellenteile gestaltet sich die Bearbeitung in analoger Weise; lediglich die Zuführung des Werkstücks zur Werkstückspindel 4 muß anders gelöst werden.

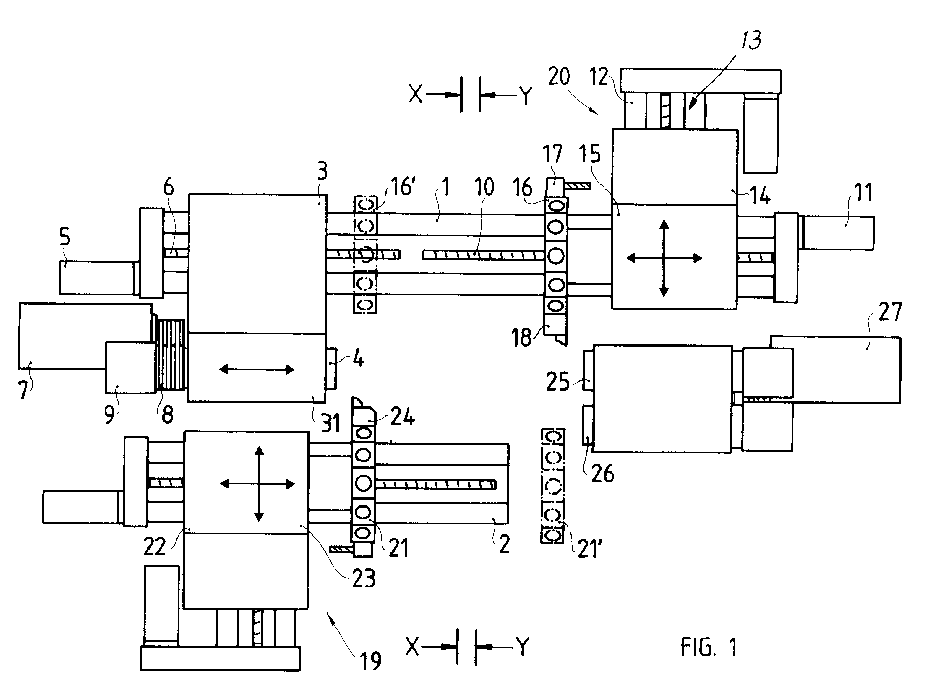

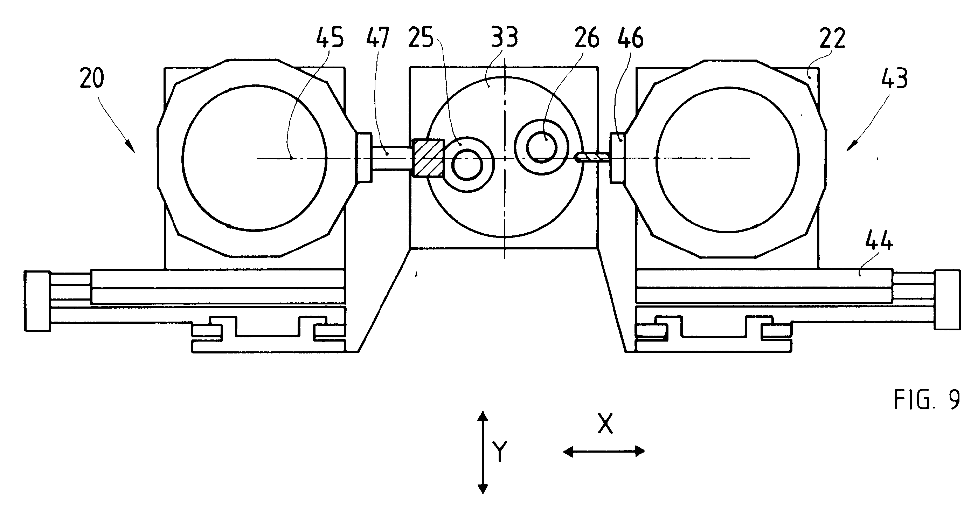

Fig. 9 zeigt eine Stirnansicht auf die Spindeltrommel mit einer leicht veränderten Anordnung des Werkzeugträgers 43. Der Revolverkopf 22 ist gegenüber der Darstellung in Fig. 1 um 180 Grad gedreht auf dem Planschlitten 44 des Werkzeugträgers 43 befestigt. Die Spindeltrommel 33 hat die eine Gegenspindel 26 über der Werkzeugbearbeitungsebene 45 und die Gegenspindel 25 unter ihr positioniert. Danach ist sowohl von dem Werkzeugträger 43 als auch von dem Werkzeugträger 20 eine außermittige Bearbeitung möglich. Die Gegenspindeln 25,26 müssen dazu in bekannter Weise stillgesetzt werden, während die Bearbeitung von rotierend angetriebenen Werkzeugen wie z. B. Bohrern 46 oder Fräsern 47 durchgeführt wird.

Entsprechend können auch senkrechte Flächen erzeugt werden. Wenn die Spindeltrommel 33 sich während der Bearbeitung gesteuert dreht und die Gegenspindeln 25,26 gleichzeitig in Gegenrichtung in der Weise gedreht werden, daß sie absolut gesehen keine Drehung ausführen, kann eine Bearbeitung wie mit einer Y-Vorschubachse ausgeführt werden, wobei der Spindelversatz in X-Vorschubrichtung durch die Werkzeugzustellun kompensiert wird. Die Drehung der Gegenspindel 25,26 in Gegenrichtung kann auf einfache Weise durch einen Abwälzvorgang eines mit der Gegenspindel 25,26 verbundenen Zahnrades an einem ortsfesten Gegenrad oder durch Abwälzen mit einem Zahnriemen erreicht werden.

Zeichnungsnummern

1 Längsführungsbahn
2 Längsführungsbahn
3 Schlitten
4 Werkstückspindel
5 Vorschubantrieb
6 Gewindespindel
7 Spindelantriebsmotor
8 Riementrieb
9 Spanneinrichtung
10 Gewindespindel
11 Vorschubmotor
12 Längsschlitten
13 Führungsbahn
14 Planschlitten
15 Werkzeugrevolverkopf
16 Werkzeugscheibe
17 Innenbearbeitungswer kzeug
18 Außenbearbeitungswer kzeug
19 Werkzuegträger
20 Werkzeugträger
21 Werkzeugscheibe
22 Werkzeugrevolverkopf
23 Werkzeug
24 Werkzeug
25 Gegenspindel
26 Gegenspindel
27 Spindelantriebsmotor
28 Längsschlitten
29 Planschlitten
30 Außenbearbeitungswer kzeug
31 Spindelkasten
32 stat. Spindelkasten
33 Schalttrommel
34 Werkzeug
35 Werkstoffstange
36 Anschlag
37 Werkstück
38 Werkstück
39 Werkzeug
40 Werkzeug
41 Abgreifzange
42 Werkstück
43 Werkzeugträger
44 Planschlitten
45 Bearbeitungsebene
46 Bohrer
47 Fräser

**Patentansprüche**

1. Drehmaschine mit einer ersten, antreibbaren Werkstückspindel (4) mit einem Spannmittel zur Aufnahme eines in Bearbeitung befindlichen Werkstücks, die in Spindelachsrichtung verschieblich ist und mit zwei in einem schaltbaren Spindelträger gelagerten Gegenspindeln (25,26) mit Spannmitteln zur Aufnahme von in der ersten Werkstückspindel vorbearbeiteten Werkstücken und mit zwei Werkzeugträgern (19,20), von denen jeder parallel und senkrecht zur Spindelachse verfahrbar ist, dadurch gekennzeichnet, daß das Spannmittel der ersten Werkstückspindel (4) und die Spannmittel der Gegenspindeln (25,26) ständig einander zugewandt sind, daß der Spindelträger um eine zu den Spindelachsen parallele Achse schaltbar ist, daß für jede der beiden Spindeln (25,26) eine Schaltstellung des Spindelträgers existiert, in der eine der beiden Spindeln (25,26) koaxial zur ersten Werkstückspindel (4) gelagert ist und daß mindestens ein Werkzeugträger (19,20) von dem Spannmittel der ersten Spindel (4) bis zum Spannmittel der gegenüberliegenden Spindel (25,26) verfahrbar ist.

2. Drehmaschine nach Anspruch 1 dadurch gekennzeichnet, daß die Werkstückspindel (4) und die beiden Werkzeugträger (19,20) auf sich in Spindelachsrichtung erstreckenden, parallelen Führungsbahnen (1,2) verfahrbar sind.

3. Drehmaschine nach Anspruch 2 dadurch gekennzeichnet, daß die Werkstückspindel (4) auf einer der Führungsbahnen (1,2) der Werkzeugträger (19,20) verfahrbar ist.

4.Drehmaschine nach Anspruch 1 dadurch gekennzeichnet, daß die Werkzeugträger (19,20) Revolverköpfe (15,22) sind, deren Schaltachsen parallel zur Spindelachse verlaufen.

5. Drehmaschine nach Anspruch 4 dadurch gekennzeichnet, daß die Werkzeugscheiben (16,21) der Werkzeugrevolverköpfe (15,22) auf einander zugewandten Seiten der Werkzeugträger (19,20) angeordnet sind.

6. Drehmaschine nach Anspruch 1 dadurch gekennzeichnet, daß der Spindelträger um 180 Grad schaltbar ist.

7. Drehmaschine nach Anspruch 1 dadurch gekennzeichnet, daß der Spindelträger eine Schalttrommel (33) ist, die in einem Spindelkasten (32) drehbar gelagert ist.

8. Drehmaschine nach Anspruch 1 dadurch gekennzeichnet, daß die Schaltachse des Spindelträgers und die Schaltachsen der Werkzeugrevolverköpfe (15,22) und die Rotationsachsen der Werkstückspindel (4) und der Gegenspindeln (25,26) in einer Ebene liegen.

9. Drehmaschine nach Anspruch 9 dadurch gekennzeichnet, daß die Ebene horizontal verläuft.

10. Drehmaschine nach Anspruch 7 dadurch gekennzeichnet, daß die Spindeltrommel (33) um solche Winkel schaltbar und in solchen Winkellagen arretierbar ist, daß die von den Gegenspindeln (25,26) gehaltenen Werkstücke im Arbeitsbereich der Werkzeuge (46,47) der Werkzeugrevolverköpfe (15,22) verbleiben.

11. Drehmaschine nach Anspruch 7 dadurch gekennzeichnet, daß die Spindeltrommel (33) um beliebige Winkel drehbar und in ihrer jeweiligen Drehlage arretierbar ist.

12. Drhmaschine nach Anspruch 12 dadurch gekennzeichent, daß die Drehung der Spindeltrommel (33) numerisch steuerbar ist.


## Claims

1. Lathe with a first drivable work spindle (4) with a chucking means for the accommodation of a workpiece undergoing machining, which is displaceable in the spindle axis direction and movable with two counter spindles (25,26), which are mounted in an indexable spindle carrier and have chucking means for the accommodation of workpieces which have been premachined in the first work spindle, and with two tool holders (19,20), each of which is movable parallel and perpendicularly to the spindle axis, characterized in that the chucking means of the first work spindle (4) and the chucking means of the counter spindles (25, 26) are constantly turned towards one another, that the spindle carrier is indexable about an axis which is parallel to the spindle axes, that for each of the two spindles (25, 26) an index position of the spindle carrier exists, in which position one of the two spindles (25, 26) is mounted coaxially to the first work spindle (4) and that at least one toolholder (19, 20) can be moved from the chucking means of the first spindle (4) to the chucking means of the spindle (25, 26) which lies opposite.

2. Lathe according to Claim 1, characterized in that the work spindle (4) and the two toolholders (19, 20) are movable on parallel guideways (1, 2) which extend in the spindle axis direction.

3. Lathe according to Claim 2, characterized in that the work spindle (4) is movable on one of the guideways (1, 2) of the toolholders (19, 20).

4. Lathe according to Claim 1, characterized in that the toolholders (19, 20) are turret heads (15, 22), the indexing axes of which run parallel to the spindle axis.

5. Lathe according to Claim 4, characterized in that the tool discs (16, 21) of the tool turret heads (15, 22) are arranged on sides of the toolholders (19, 20), which sides face towards one another.

6. Lathe according to Claim 1, characterized in that the spindle carrier is indexable by 180 degrees.

7. Lathe according to Claim 1, characterized in that the spindle carrier is an indexing drum (33), which is rotatably mounted in a headstock (32).

8. Lathe according to Claim 1, characterized in that the indexing axis of the spindle carrier and the indexing axes of the tool turret heads (15, 22) and the axes of rotation of the tool spindle (4) and of the counter spindles (25, 26) lie in one plane.

9. Lathe according to Claim 9, characterized in that the plane runs horizontally.

10. Lathe according to Claim 7, characterized in that the spindle drum (33) is indexable by such angles and is stoppable in such angular positions that the workpieces held by the counter spindles (25, 26) remain in the working area of the tools (46, 47) of the tool turret heads (15, 22).

11. Lathe according to Claim 7, characterized in that the spindle drum (33) is rotatable by any angles and is stoppable in its respective rotation position.

12. Lathe according to Claim 1, characterized in that the rotation of the spindle drum (33) is numerically controllable.


**Revendications**

1. Tour avec une première broche porte-pièce (4) pouvant être entraînée, avec un moyen de serrage pour la réception d'une pièce se trouvant en usinage, qui est mobile dans la direction de l'axe de la broche et avec deux contre-broches (25, 26) logées dans un porte-broche commutable avec des moyens de serrage pour la réception des pièces pré-traitées dans la première broche porte-pièce et avec deux porte-outil (19, 20) dont chacun est mobile parallèlement et perpendiculairement à l'axe de la broche, caractérisé en ce que le moyen de serrage de la première broche porte-pièce (4) et les moyens de serrage des contre-broches (25, 26) sont constamment tournés les uns vers les autres, en ce que le porte-broche est commutable autour d'un axe parallèle à l'axe des broches, en ce que pour chacune des deux broches (25, 26) il existe une position de commutation du porte-broche dans laquelle l'une des deux broches (25, 26) est coaxiale à la première broche porte-pièce (4) et en ce qu'au moins un porte-outil (19, 20) est mobile du moyen de serrage de la première broche (4) jusqu'au moyen de serrage de la broche (25, 26) situé en vis-à-vis.

2. Tour selon la revendication 1, caractérisé en ce que la broche porte-pièce (4) et les deux porte-outil (19, 20) sont mobiles sur des voies parallèles de guidage (1, 2) s'étendant dans la direction de l'axe des broches.

3. Tour selon la revendication 2, caractérisé en ce que la broche porte-pièce (4) est mobile sur l'une des voies de guidage (1, 2) des porte-outil (19, 20).

4. Tour selon la revendication 1, caractérisé en ce que les porte-outil (19, 20) sont des tourelles (15, 22) dont les axes de commutation sont parallèles à l'axe des broches.

5. Tour selon la revendication 4, caractérisé en ce que les plateaux pour outil (16, 21) des tourelles (15, 22) sont agencés sur les côtés des porte-outil (19, 20) qui sont tournés l'un vers l'autre.

6. Tour selon la revendication 1 caractérisé en ce que le porte-broche peut être commuté sur 180 degrés.

7. Tour selon la revendication 1, caractérisé en ce que le porte-broche est un tambour (33) qui est logé rotatif dans une boîte à broches (32).

8. Tour selon la revendication 1, caractérisé en ce que l'axe de changement du porte-broche et les axes de changement des tourelles à outils (15, 22) et les axes de rotation de la broche porte-pièce (4) et des contre-broches (25, 26) se trouvent dans un même plan.

9. Tour selon la revendication 9, caractérisé en ce que le plan est horizontal.

10. Tour selon la revendication 7, caractérisé en ce que le tambour (33) peut être commuté sur un angle tel et être arrêté à une position angulaire telle que les pièces retenues par les contre-broches (25, 26) restent dans la zone de travail des outils (46, 47) des tourelles (15, 22).

11. Tour selon la revendication 7, caractérisé en ce que le tambour (33) est rotatif sur un angle souhaité et peut être bloqué en toute position de rotation.

12. Tour selon la revendication 12, caractérisé en ce que la rotation du tambour (33) peut être à commande numérique.

FIG. 1

FIG. 2

FIG. 3

FIG. 4

FIG. 5

FIG. 6

FIG. 7

FIG. 8

FIG. 9

EP 0 410 044 B1